# EUROPEAN PATENT APPLICATION

(11) **EP 4 550 546 A1**
(43) Date of publication of application: **07.05.2025**
(21) Application number: 23854136.1
(22) Date of filing: 30.06.2023
(51) Int. Cl.: H01M 50/244, H01M 50/271, H01M 50/183

(54) **BATTERY CASE, BATTERY PACK AND ELECTRIC VEHICLE**

(30) Priority: 19.08.2022 CN 202222191398 U
(71) Applicant: Nio Battery Technology (Anhui) Co., Ltd., Hefei, Anhui 230601 (CN)
(72) Inventor: CAO, Yu, Shanghai 201804 (CN)
(74) Representative: Vossius & Partner Patentanwälte Rechtsanwälte mbB
(86) International application number: PCT/CN2023/105104
(87) International publication number: WO 2024/037231

(57) **Abstract**

Provided are a battery case (1), a battery pack and an electric vehicle. The battery case (1) includes: a case main body (10) having a case flange end (11); a maintenance cover (20) having a maintenance cover flange end (21) fixedly connected to a portion of the case flange end (11), where the maintenance cover flange end (21) includes a first flange end portion (211) including a plurality of first protrusions (2111) and first recesses (2112) that are formed alternately with each other; and an upper cover (30) arranged side by side with the maintenance cover (20) on the case main body (10) and having an upper cover flange end (31) fixedly connected to a remaining portion of the case flange end (11), where the upper cover flange end includes a second flange end portion (311); the second flange end portion (311) and the first flange end portion (211) are positioned opposite each other between the upper cover (30) and the maintenance cover (20); the second flange end portion includes a plurality of second protrusions (3111) and second recesses (3112) that are formed alternately with each other; each second protrusion (3111) at least partially extends into the corresponding first recess (2112); and each first protrusion (2111) at least partially extends into the corresponding second recess (3112). The upper cover (30) and the maintenance cover (20) of the battery case (10) are arranged side by side with a narrow sealing width.

## Description

### CROSS-REFERENCE TO RELATED APPLICATIONS

The present application claims priority to Chinese Utility Model Patent Application No. 202222191398.4, filed on August 19, 2022, which is incorporated herein by reference in their entirety.

### Technical Field

The utility model relates to the field of batteries, and in particular to a battery case, a battery pack and an electric vehicle.

### Background Art

With the continuous improvement of living standards, vehicles have become one of the indispensable means of transportation for people's lives today. However, the popularity of traditional fuel vehicles causes an energy crisis and environmental pollution to some extent. Human beings are currently facing the third major transformation of transportation energy power systems, that is, replacing oil and internal combustion engines with electricity and power batteries, thus bringing human beings into an era of clean energy. Thus, new energy vehicles are being gradually promoted and applied.

A battery pack is mainly composed of a power battery, and serves as a power source for a new energy vehicle (and especially an electric vehicle). The battery pack has a battery case. The battery case includes, but is not limited to, a case main body and an upper cover. The case main body is used for housing a cell or a battery module, a battery management system (BMS for short), a thermal management system, etc. The upper cover covers the case main body, and is fixed to the case main body via a flange end so as to fix the aforementioned components in the case main body.

When a power battery system of the electric vehicle fails, the upper cover needs to be opened for inspection and maintenance. For the electric vehicle, the battery pack has a relatively large volume and has high requirements for waterproof and dustproof. Opening the entire upper cover to inspect and maintain the power battery is often cumbersome and is likely to cause damage to the battery case and undermine the sealing effect between the case main body and the upper cover. To solve the problem, a maintenance cover is also provided on a case main body of a battery pack in the prior art, and a battery can be inspected and repaired just by disassembling the small maintenance cover.

When the maintenance cover is arranged side by side with the upper cover, a wide mounting surface (i.e., a case flange end) needs to be reserved on the case main body to complete a sealed connection between the maintenance cover and the upper cover and the case main body. However, at a position where the maintenance cover is opposite the upper cover, there is always no sufficient sealing width on the case flange end, and it is difficult to achieve good sealing between the side-by-side maintenance cover and upper cover and the case main body.

Therefore, there is a need for a new technical solution in the art to solve the problem described above.

### Summary

In order to solve the above problem in the prior art, that is, to solve the technical problem in the prior art that there is no sufficient sealing width on a flange end of a battery case, the utility model provides a battery case. The battery case includes: a case main body having a case flange end; a maintenance cover having a maintenance cover flange end fixedly connected to a portion of the case flange end, where the maintenance cover flange end includes a first flange end portion including a plurality of first protrusions and first recesses that are formed alternately with each other; and an upper cover arranged side by side with the maintenance cover on the case main body and having an upper cover flange end fixedly connected to a remaining portion of the case flange end, where the upper cover flange end includes a second flange end portion; the second flange end portion and the first flange end portion are positioned opposite each other between the upper cover and the maintenance cover; the second flange end portion includes a plurality of second protrusions and second recesses that are formed alternately with each other; each of the second protrusions is opposite to the corresponding first recess and at least partially extends into the corresponding first recess; and each of the second recesses is opposite to the corresponding first protrusion, and the corresponding first protrusion at least partially extends into the second recess.

In the utility model, the maintenance cover and the upper cover of the battery case are arranged side by side on the case main body, and the first flange end portion and the second flange end portion that are adjacent to each other, are provided on the maintenance cover and the upper cover, respectively. The first flange end portion is composed of the plurality of first protrusions and first recesses, and the first protrusions and the first recesses are alternately connected to form a wave-like structure; and the second flange end portion is composed of the plurality of second protrusions and second recesses, and the second protrusions and the second recesses are alternately arranged and connected to form a sawtooth-like or wave-like structure. Further, the first protrusions extend into the corresponding second recesses, and the second protrusions extend into the corresponding first recesses. The above configuration can not only ensure the reliable fixation of the maintenance cover and the upper cover on the case main body, but can also significantly reduce the width of the case flange end fixed to the first flange end portion and the second flange end portion. In other words, with the above configuration, the battery case of the utility model can effectively solve the problem of insufficient sealing width on the case flange end when the maintenance cover and the upper cover are arranged side by side.

In a preferred technical solution of the battery case as described above, the first protrusions and the second recesses opposite thereto have the same shape, and the first recesses and the second protrusions opposite thereto have the same shape. The above configuration helps to improve the overall aesthetics.

In a preferred technical solution of the battery case as described above, the first protrusions and the second protrusions are trapezoidal. The trapezoidal shape is easy to process and manufacture, and facilitates the matching of the first protrusions with the second recesses, and the matching of the second protrusions with the first recesses.

In a preferred technical solution of the battery case as described above, at least one first threaded hole is provided in each of the first protrusions; at least one second threaded hole is provided in each of the second protrusions; the first flange end portion is fixed to the case flange end by means of first threaded fasteners, and each first threaded fastener passes through the first threaded hole; and the second flange end portion is fixed to the case flange end by means of second threaded fasteners, and each second threaded fastener passes through the second threaded hole. With the above configuration, each of the first flange end portion and the second flange end portion is fixed to the case flange end in a threaded connection manner, achieving the advantages of a simple connection structure, reliable connection, easy assembly and disassembly, low cost, etc.

In a preferred technical solution of the battery case as described above, a first sealant is provided between the maintenance cover flange end and the case flange end; and a second sealant is provided between the upper cover flange end and the case flange end. The above configuration helps to ensure good sealing between the maintenance cover and the upper cover and the case main body.

In a preferred technical solution of the battery case as described above, the first sealant extends along a first outer contour of the maintenance cover flange end, and the first threaded fastener is located between the first outer contour and the first sealant; and the second sealant extends along a second outer contour of the upper cover flange end, and the second threaded fastener is located between the second outer contour and the second sealant. The above configuration helps to ensure a reliable connection and good sealing between the maintenance cover and the upper cover and the case main body.

In a preferred technical solution of the battery case as described above, the battery case further includes a battery compartment and a control compartment that are adjacent to each other, where the upper cover is configured to cover the battery compartment, and the maintenance cover is configured to cover the control compartment.

In a preferred technical solution of the battery case as described above, the first protrusions and the second protrusions are arc-shaped. The arc shape is easy to process and manufacture, and facilitates the matching of the first protrusions with the second recesses, and the matching of the second protrusions with the first recesses.

In order to solve the above problem in the prior art, that is, to solve the technical problem in the prior art that there is no sufficient sealing width on a flange end of a battery case and it is difficult to achieve side-by-side sealing of a maintenance cover and an upper cover, the utility model provides a battery pack, including: a battery case according to any one of the technical solutions described above; and a plurality of cells arranged in the battery case. With the above configuration, the battery case of the battery pack of the utility model can adopt a structure in which the maintenance cover and the upper cover are arranged side by side and can ensure a reliable connection and good sealing between the maintenance cover and the upper cover and the case main body.

In order to solve the above problem in the prior art, that is, to solve the technical problem in the prior art that there is no sufficient sealing width on a flange end of a battery case and it is difficult to achieve side-by-side sealing of a maintenance cover and an upper cover, the utility model provides an electric vehicle, including a battery pack as described above.

### Brief Description of the Drawings

Preferred implementations of the utility model are described below with reference to the accompanying drawings, in which:
FIG. 1 is a schematic diagram of a partial structure of an embodiment of a battery case according to the utility model; and
FIG. 2 is an enlarged diagram of a partial structure at part A in FIG. 1.

### List of reference signs:

1. Battery case; 10. Case main body; 11. Case flange end; 20. Maintenance cover; 21. Maintenance cover flange end; 211. First flange end portion; 2111. First protrusion; 2112. First recess; 2113. First threaded hole; 30. Upper cover; 31. Upper cover flange end; 311. Second flange end portion; 3111. Second protrusion; 3112. Second recess; 3113. Second threaded hole.

### Detailed Description of Embodiments

The preferred implementations of the utility model are described below with reference to the accompanying drawings. It should be understood by those skilled in the art that these implementations are only for explaining the technical principles of the utility model and are not intended to limit the scope of protection of the utility model.

It should be noted that, in the description of the utility model, the terms that indicate the direction or positional relationship, such as "upper", "lower", "left", "right", "inner", and "outer", are based on the direction or positional relationship shown in the figures, which is merely for ease of description instead of indicating or implying that the device or element must have a particular orientation and be constructed and operated in a particular orientation, and therefore should not be construed as limiting the utility model. In addition, the terms "first" and "second" are merely used for descriptive purposes, and should not be construed as indicating or implying relative importance.

In addition, it should also be noted that, in the description of the utility model, the terms "dispose" and "connect" should be interpreted in a broad sense unless explicitly defined and limited otherwise. For example, a connection may be a fixed connection, a detachable connection, or an integral connection; or may be a direct connection, an indirect connection by means of an intermediate medium, or internal communication between two elements. For those skilled in the art, the specific meaning of the above-mentioned terms in the utility model can be interpreted according to the specific situation.

In order to solve the technical problem in the prior art that there is no sufficient sealing width on a flange end of a battery case and it is difficult to achieve side-by-side sealing of a maintenance cover and an upper cover, the utility model provides a battery case 1. The battery case 1 includes: a case main body 10 having a case flange end 11; a maintenance cover 20 having a maintenance cover flange end 21 fixedly connected to a portion of the case flange end 11, where the maintenance cover flange end 21 includes a first flange end portion 211 including a plurality of first protrusions 2111 and first recesses 2112 that are formed alternately with each other; and an upper cover 30 arranged side by side with the maintenance cover 20 on the case main body 10 and having an upper cover flange end 31 fixedly connected to a remaining portion of the case flange end 11, where the upper cover flange end 31 includes a second flange end portion 311; the second flange end portion 311 and the first flange end portion 211 are positioned opposite each other between the upper cover 30 and the maintenance cover 20; the second flange end portion 311 includes a plurality of second protrusions 3111 and second recesses 3112 that are formed alternately with each other; each second protrusion 3111 is opposite to the corresponding first recess 3112 and at least partially extends into the corresponding first recess 2112; and each second recess 2112 is opposite to the corresponding first protrusion 2111, and the corresponding first protrusion 2111 at least partially extends into the second recess 3112.

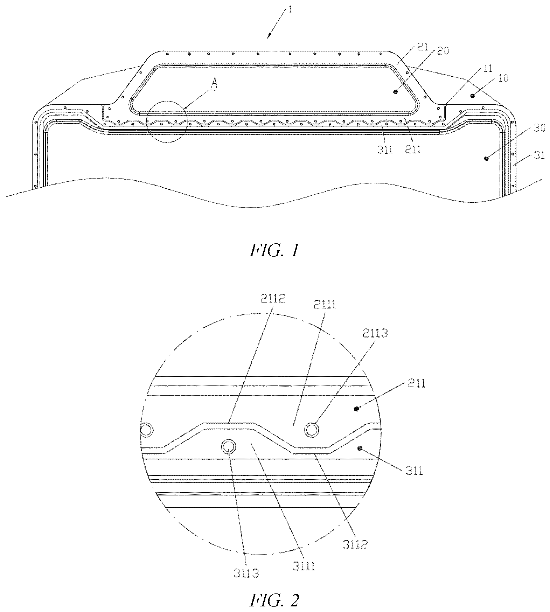

FIG. 1 is a schematic diagram of a partial structure of an embodiment of a battery case according to the utility model. As shown in FIG. 1, in one or more embodiments, the battery case 1 includes a case main body 10, a battery compartment (not shown in the figure), a control compartment (not shown in the figure), a maintenance cover 20 and an upper cover 30. The battery compartment is formed in the case main body 10 and is used for housing a cell or a battery module. The control compartment is also formed in the case main body 10 and is arranged side by side with the battery compartment. A battery management system, a thermal management system, etc., are provided in the control compartment. Since the control compartment and the battery compartment are arranged side by side, the maintenance cover 20 and the upper cover 30 are arranged side by side on the case main body 10. The maintenance cover 20 covers the control compartment and is fixedly connected to the case main body 10, so that the control compartment is sealed. The upper cover 30 covers the battery compartment and is fixedly connected to the case main body 10, so that the battery compartment is sealed. It should be noted that, since FIG. 1 is a top view of the battery case 1, the battery compartment and the control compartment of the battery case 1 are not visible in the figure because they are covered by the upper cover 30 and the maintenance cover 20.

As shown in FIG. 1, in one or more embodiments, the case main body 10 has a case flange end 11. One portion of the case flange end 11 is used to fix the maintenance cover 20, and the other portion thereof is used to fix the upper cover 30. A plurality of case threaded holes (not shown in the figure) are also provided in the case flange end 11. In one or more embodiments, the case threaded holes are configured to accommodate M6 bolts. In an alternative embodiment, the case threaded holes may also be configured to accommodate bolts of other suitable sizes and can be designed flexibly according to actual requirements.

Further referring to FIG. 1, the maintenance cover 20 is located above as illustrated. In one or more embodiments, the maintenance cover 20 is generally trapezoidal. In an alternative embodiment, the maintenance cover 20 may also be rectangular or semicircular-like or any other suitable shape, as long as it can cover the control compartment and form a sealed connection with the case main body 10. The maintenance cover 20 has a maintenance cover flange end 21. The maintenance cover flange end 21 is a narrow edge surrounding an outer periphery of the maintenance cover 20. The maintenance cover 20 is fixedly connected to a corresponding portion of the case flange end 11 by means of the maintenance cover flange end 21, so that the maintenance cover 20 is fixed to the case main body 10. A plurality of maintenance cover threaded holes (not marked in the figure) are provided in the maintenance cover flange end 21. A certain spacing is formed between the maintenance cover threaded holes. It should be noted that the maintenance cover threaded holes in the maintenance cover flange end 21 may be evenly distributed or unevenly distributed, as long as they can correspond to the case threaded holes in the case flange end 11 to fix the maintenance cover 20 to the case main body 10 and ensure a reliable connection between the maintenance cover 20 and the case main body 10. In this embodiment, the maintenance cover threaded holes are configured to accommodate M6 bolts. In an alternative embodiment, the maintenance cover threaded holes may also be configured to accommodate bolts of other suitable sizes, as long as it is ensured that the maintenance cover flange end 21 can be fixed to the case flange end 11 by means of threaded fasteners.

FIG. 2 is an enlarged diagram of a partial structure at part A in FIG. 1. As shown in FIGS. 1 and 2, the maintenance cover flange end 21 further includes a first flange end portion 211. The first flange end portion 211 is located at a lower portion of the maintenance cover 20 as illustrated. In one or more embodiments, the first flange end portion 211 includes a plurality of first protrusions 2111 and first recesses 2112. The first protrusions 2111 and the first recesses 2112 are all in the same trapezoidal shape. The first protrusions 2111 and the first recesses 2112 are alternately arranged and connected, so that an outer edge (i.e., a lower edge shown in the figure) of the first flange end portion 211 forms a sawtooth-like or wave-like shape. In an alternative embodiment, the first protrusions 2111 and the first recesses 2112 may also have different trapezoidal shapes. For example, the overall length of the first protrusion 2111 is longer, and the overall length of the first recess 2112 is shorter; alternatively, the overall length of the first recess 2112 is longer, and the overall length of the first protrusion 2111 is shorter. In an alternative embodiment, the first protrusion 2111 may also be arc-shaped, square or any other suitable shape. Alternatively, the first recess 2112 may also be arc-shaped, square or any other suitable shape.

As shown in FIGS. 1 and 2, in one or more embodiments, a plurality of evenly distributed first threaded holes 2113 are provided in the first flange end portion 211. It is contemplated that the first threaded holes 2113 are part of the maintenance cover threaded holes. Specifically, one first threaded hole 2113 is provided in each first protrusion 2111. In an alternative embodiment, multiple first threaded holes 2113 may be provided in each first protrusion 2111, which may be flexibly configured according to actual requirements. Each first threaded hole 2113 is located approximately in the middle of the corresponding first protrusion 2111. In an alternative embodiment, the first threaded hole 2113 may also be disposed at any suitable position on the corresponding first protrusion 2111. Alternatively, the first threaded hole 2113 may also be disposed at any suitable position on the first flange end portion 211 as long as a reliable connection with the case main body 10 can be formed.

Further referring to FIG. 1, the upper cover 30 is located below as illustrated. Only a part of the structure of the upper cover 30 is illustrated in the figure, and it is contemplated that the upper cover 30 is generally rectangular. In an alternative embodiment, the upper cover 30 may be in another suitable shape, as long as it can ensure covering the battery compartment and forming a sealed connection with the case main body 10. In one or more embodiments, the upper cover 30 has an upper cover flange end 31. The upper cover flange end 31 is a narrow edge surrounding an outer periphery of the upper cover 30. The upper cover 30 is fixedly connected to another portion of the case flange end 11 by means of the upper cover flange end 31, so that the upper cover 30 is fixed to the case main body 10. A plurality of upper cover threaded holes (not marked in the figure) are provided in the upper cover flange end 31. A certain spacing is formed between the upper cover threaded holes. It should be noted that the upper cover threaded holes in the upper cover flange end 31 may be evenly distributed or unevenly distributed, as long as they can correspond to the case threaded holes in the case flange end 11 to fix the upper cover 30 to the case main body 10 and ensure a reliable connection between the upper cover 30 and the case main body 10. In this embodiment, the upper cover threaded holes are configured to accommodate M6 bolts. In an alternative embodiment, the upper cover threaded holes may also be configured to accommodate bolts of other suitable sizes, as long as it is ensured that the upper cover flange end 31 can be fixed to the case flange end 11 by means of threaded fasteners.

As shown in FIGS. 1 and 2, the upper cover flange end 31 further includes a second flange end portion 311. The second flange end portion 311 is located at an upper portion of the upper cover 30 as illustrated. In one or more embodiments, the second flange end portion 311 includes a plurality of second protrusions 3111 and second recesses 3112. The second protrusions 3111 and the second recesses 3112 are all of the same trapezoidal shape. The second protrusions 3111 and the second recesses 3112 are alternately arranged and connected, so that an outer edge (i.e., a upper edge shown in the figure) of the second flange end portion 311 forms a sawtooth-like or wave-like shape. In an alternative embodiment, the second protrusions 3111 and the second recesses 3112 may also have different trapezoidal shapes. For example, the overall length of the second protrusion 3111 is longer, and the overall length of the second recess 3112 is shorter; alternatively, the overall length of the second recess 3112 is longer, and the overall length of the second protrusion 3111 is shorter. In an alternative embodiment, the second protrusion 3111 may also be arc-shaped, square or any other suitable shape. Alternatively, the second recess 3112 may also be arc-shaped, square or any other suitable shape.

As shown in FIGS. 1 and 2, in one or more embodiments, a plurality of evenly distributed second threaded holes 3113 are provided in the second flange end portion 311. It is contemplated that the second threaded holes 3113 are part of the upper cover threaded holes. Specifically, one second threaded hole 3113 is provided in each second protrusion 3111. In an alternative embodiment, multiple second threaded holes 3113 may be provided in each second protrusion 3111, which may be flexibly configured according to actual requirements. Each second threaded hole 3113 is located approximately in the middle of the corresponding second protrusion 3111. In an alternative embodiment, the second threaded hole 3113 may also be disposed at any suitable position on the corresponding second protrusion 3111. Alternatively, the second threaded hole 3113 may also be disposed at any suitable position on the second flange end portion 311 as long as a reliable connection with the case main body 10 can be formed.

Further referring to FIGS. 1 and 2, the first flange end portion 211 and the second flange end portion 311 are positioned opposite each other between the upper cover 30 and the maintenance cover 20. In one or more embodiments, the first protrusions 2111 on the first flange end portion 211 and the second recesses 3112 on the second flange end portion 311 have the same shape. The first protrusion 2111 partially extends into the corresponding second recess 3112. There is an assembly clearance of 1 mm between the first protrusions 2111 and the second recesses 3111. In an alternative embodiment, the first protrusions 2111 and the second recesses 3112 may also abut each other. Alternatively, the assembly clearance between the first protrusions 2111 and the second recesses 3112 may also be a different value, as long as it is ensured that the assembly clearance is between 0 mm and 2 mm. The second protrusions 3111 on the second flange end portion 311 and the first recesses 2112 on the first flange end portion 211 have the same shape. The second protrusion 3111 partially extends into the corresponding first recess 2112. There is an assembly clearance of 1 mm between the second protrusions 3111 and the first recesses 2112. In an alternative embodiment, the second protrusions 3111 and the first recesses 2112 may also abut each other. Alternatively, the assembly clearance between the second protrusions 3111 and the first recesses 2112 may also be a different value, as long as it is ensured that the assembly clearance is between 0 mm and 2 mm.

In one or more embodiments, each of the maintenance cover flange end 21 and the upper cover flange end 31 is fixedly connected to the case flange end 11 by means of threaded fasteners (not shown in the figure). It should be noted that a first sealant (not shown in the figure) is also provided between the maintenance cover flange end 21 and the case flange end 11. The first sealant extends along an outer edge (i.e., a first outer contour, not marked in the figure) of the maintenance cover flange end 21. The first sealant is arranged on an inner side of the first threaded hole 2113. In other words, the first threaded holes 2113 are located between the first outer contour and the first sealant. The provision of the first sealant helps to ensure a sealed connection between the maintenance cover 20 and the case main body 10. A second sealant (not shown in the figure) is also provided between the upper cover flange end 31 and the case flange end 11. The second sealant extends along an outer edge (i.e., a second outer contour, not marked in the figure) of the upper cover flange end 31. The second sealant is arranged on an inner side of the second threaded hole 3113. In other words, the second threaded holes 3113 are located between the second outer contour and the second sealant. The provision of the second sealant helps to ensure a sealed connection between the upper cover 30 and the case main body 10.

By means of the structural design of the first flange end portion 211 and the second flange end portion 311 as described above, the battery case 1 of the utility model enables the maintenance cover 20 and the upper cover 30 to be arranged side by side on the case main body 10. Specifically, with the above configuration, the battery case 1 can not only ensure the arrangement of the sealants and the threaded holes on the first flange end portion 211 and the second flange end portion 311, thereby ensuring a reliable connection between the maintenance cover 20 and the upper cover 30 and the case main body 10, but can also enable a narrower mounting width of a corresponding portion of the case flange end 11 on the case main body 10, so as to ensure the compactness of the overall structure of the battery pack. It should be noted that the mounting width mentioned here refers to a distance between two opposite edges (based on the orientation shown in FIG. 1, upper and lower edges) of the case flange end 11 covered by the first flange end portion 211 and the second flange end portion 311.

The utility model further provides a battery pack (not shown in the figure). In one or more embodiments, the battery pack includes a battery case 1 according to any one of the above embodiments. The battery pack further includes, but is not limited to, components such as a plurality of cells, a battery management system, and a thermal management system. The cells are arranged in a battery compartment of the battery case 1. The cells can be electrically connected in series or in parallel to provide power to an external device. In an alternative embodiment, a plurality of battery modules also may be provided in the battery pack. The battery management system and the thermal management system are arranged in a control compartment of the battery case 1. The battery pack has the advantages of being easy to maintain and having a compact structure.

The utility model further provides an electric vehicle (not shown in the figure). The electric vehicle includes a battery pack according to any one of the above embodiments. In addition, the electric vehicle further includes, but is not limited to, components such as a vehicle body, a chassis, wheels, a motor.

Heretofore, the technical solutions of the utility model have been described in conjunction with the preferred implementations shown in the drawings, however, those skilled in the art can readily understand that the scope of protection of the utility model is obviously not limited to these specific implementations. Those skilled in the art could make equivalent changes or substitutions to the related technical features without departing from the principles of the utility model, and all the technical solutions after the changes or the substitutions fall within the scope of protection of the utility model.

## Claims

1. A battery case, comprising:
a case main body having a case flange end;
a maintenance cover having a maintenance cover flange end fixedly connected to a portion of the case flange end, wherein the maintenance cover flange end comprises a first flange end portion comprising a plurality of first protrusions and first recesses that are formed alternately with each other; and
an upper cover arranged side by side with the maintenance cover on the case main body and having an upper cover flange end fixedly connected to a remaining portion of the case flange end, wherein the upper cover flange end comprises a second flange end portion; the second flange end portion and the first flange end portion are positioned opposite each other between the upper cover and the maintenance cover; the second flange end portion comprises a plurality of second protrusions and second recesses that are formed alternately with each other; each of the second protrusions is opposite to the corresponding first recess and at least partially extends into the corresponding first recess; and each of the second recesses is opposite to the corresponding first protrusion, and the corresponding first protrusion at least partially extends into the second recess.

2. The battery case according to claim 1, wherein the first protrusions and the second recesses opposite thereto have the same shape, and the first recesses and the second protrusions opposite thereto have the same shape.

3. The battery case according to claim 2, wherein the first protrusions and the second protrusions are trapezoidal.

4. The battery case according to claim 3, wherein at least one first threaded hole is provided in each of the first protrusions; and at least one second threaded hole is provided in each of the second protrusions;
the first flange end portion is fixed to the case flange end by means of first threaded fasteners, and each first threaded fastener passes through the first threaded hole; and
the second flange end portion is fixed to the case flange end by means of second threaded fasteners, and each second threaded fastener passes through the second threaded hole.

5. The battery case according to claim 4, wherein a first sealant is provided between the maintenance cover flange end and the case flange end; and a second sealant is provided between the upper cover flange end and the case flange end.

6. The battery case according to claim 5, wherein the first sealant extends along a first outer contour of the maintenance cover flange end, and the first threaded fastener is located between the first outer contour and the first sealant; and
the second sealant extends along a second outer contour of the upper cover flange end, and the second threaded fastener is located between the second outer contour and the second sealant.

7. The battery case according to claim 1, further comprising a battery compartment and a control compartment that are adjacent to each other, wherein the upper cover is configured to cover the battery compartment, and the maintenance cover is configured to cover the control compartment.

8. The battery case according to claim 2, wherein the first protrusions and the second protrusions are arc-shaped.

9. A battery pack, comprising:
a battery case according to any one of claims 1 to 8; and
a plurality of cells arranged in the battery case.

10. An electric vehicle, comprising a battery pack according to claim 9.
